# EUROPEAN PATENT SPECIFICATION

(11) **EP 2 917 717 B1**
(45) Date of publication and mention of the grant of the patent: **29.04.2020**
(21) Application number: 13818476.7
(22) Date of filing: 08.11.2013
(51) Int. Cl.: G01N 17/04

(54) **FIELD MEASUREMENT OF CORROSION AND EROSION**
IN-SITU-MESSUNG VON KORROSION UND EROSION
MESURE SUR LE TERRAIN DE CORROSION ET D'ÉROSION

(30) Priority: 09.11.2012 NL 2009787; 07.11.2013 NL 2011758
(43) Date of publication of application: 16.09.2015
(73) Proprietor: Ironhaven Holding B.V., 2134 SC Hoofddorp (NL)
(72) Inventor: HESELMANS, Johannes Jacobs Maria, 2134 SC Hoofddroop (NL)
(74) Representative: Assendelft, Jacobus H.W.
(86) International application number: PCT/NL2013/050807
(87) International publication number: WO 2014/073969

(56) References cited:
- WO-A1-2009/015318
- US-A- 4 780 664
- US-B1- 7 282 928
- VINOD S AGARWALA ET AL: "Corrosion Detection and Monitoring - A Review", CORROSION 2000, 1 April 2000 (2000-04-01), pages 1-19, XP055079817,
- Jan Heselmans ET AL: "New Corrosion Monitoring Probe Combines ER, LPR, HDA, Floating B-constant, Electrochemical Noise and Conductivity Measurements", , 21 March 2013 (2013-03-21), XP055102958, Retrieved from the Internet: URL:http://www.corrodium.nl/web/downloads/ Jan_Heselmans_Paper_Corrosion_Monitoring.p df [retrieved on 2014-02-18]

## Description

The present invention relates generally to corrosion or erosion measurement associated with production scale operating systems, in other words field measurement of corrosion or erosion (e.g. sand erosion). In particular the invention is directed to online or real time measurement and monitoring the corrosion or erosion behaviour of an appliance, e.g. a corroding fluid (e.g. of high pressure such as above 10 or 100 or even 500 or 1000 bar and/or high temperature such as above 100 or 150 degrees Celsius) or eroding fluid (e.g. sand or a different solid or particulate material) conducting pipe or conduit of metal. For this, electrodes are applied which are directly immersed into the corroding or eroding fluid within the object of interest, which electrodes are galvanically connected to a data processing system such as a digital computer with CPU and memory.

Unlike laboratory measurement instrumentation, field devices are constructed using sealed protective enclosures to withstand adverse environmental conditions in manufacturing facilities, chemical processing plants, oil refineries and the like, in which the device may be subjected to extreme temperatures, humidity and handling and operating loads.

Electrodes, exposed to, e.g. projecting into the corroding fluid (when flush, the electrode does not project into the corroding fluid, however is exposed to it) to carry out the measurements, and electrode holder, are typically termed an electrode probe by the skilled person in the field. Each electrode is held in an associated insulator.

Many chemical plants involve storage or transport of fluids (gas or liquid or mixtures) through pipes and tanks, which structures may corrode due to contact with the fluids they hold. For maintenance and safety it is common practice to ascertain the amount and rate of such corrosion. The corrosion data may be used to apply remedial measures such as inhibitor injection, or to evaluate the efficiency of such remedial measures. This invention is also concerned with components exposed to corrosion or erosion caused by environmental conditions or exposure or transport of sea water (e.g. off shore applications) and many other industrial fields.

Nowadays in monitoring an object suffering from corrosion attack by the fluid it holds or conveys, one relies upon corrosion data obtained through the simultaneous application of different measuring techniques using separate electrode probes, each dedicated to a relevant measuring technique and each bearing one or more electrodes immersed into said corroding fluid within the object. Each electrode probe is mounted to its individual access fitting at the object, thus the electrode probes are spaced along the object to be monitored, e.g. pipe line.

Among these different measuring techniques are the electrochemical technique (further also commonly named LPR (linear polarization resistance) technique) the Electrical Resistance (ER) technique and also the use of corrosion coupons (CC). Electrochemical covers many different techniques, among which LPR, electrochemical noise and harmonic distortion analysis are the most important.

With the LPR technique electrochemical techniques are applied to measure the rate of corrosion. Typically, a two or three electrode test cell configuration with a potentiostatic circuit cell control is used. A potential difference is applied between the working electrode (WE) and the reference electrode (RE) (if three electrodes are applied by supplying a polarization current through the third, auxiliary (AE), electrode). Typically, all electrodes are identical. Each electrode is galvanically connected to the measuring implement, e.g. datalogger or computer, by an own single connection, e.g. wire.

The ER technique applies ER probes which measure metal loss very accurately at sensitivity of at least 0.1 micrometre and even up to 0,01 micrometre. With electrical resistance (ER) measuring the electrical resistance of the corroding electrode is compared to an identical electrode that is not corroding. Both elements experience the same temperature. In this way, resistance changes caused by temperature changes are being eliminated. Each electrode is galvanically connected to the measuring implement, e.g. datalogger or computer, by a plurality of individual connections, e.g. wires, typically 5 or 6, galvanically connected to the electrode at individual locations mutually spaced along the electrode. Typically, two connections are used for the galvanic current supply to the electrode, the remaining connections are used to measure voltage drop between two connections. The ER technique also allows erosion monitoring, even in non corrosive environments (e.g. transport of sand laden dry gas).

A corrosion coupon is a small metal strip like electrode immersed into the corroding fluid within the appliance to be monitored for corrosion. Such coupon need to be examined from the appliance to be able to examine it visually for corrosion. A coupon typically has no galvanic connection to a measuring implement.

The electrochemical, e.g. LPR, probe also allows electrochemical current noise (ECN) measurement. ECN uses the detection and analysis of fluctuations of a current between two nominally identical electrodes connected through a low resistance current measuring device such a zero resistance ammeter (ZRA). If the two electrodes are undergoing uniform corrosion then the measured current will be very low or zero, since the anodic and cathodic areas will be intermixed and evenly distributed over each of the electrodes. Electrons from a particular microscopic anode site will travel only a short distance to the nearest cathodic site, most likely located on the same electrode. The situation will be different if localized corrosion attack occurs. For example a break in a passive oxide film on one of the electrodes will cause current flow not just between the defect site on that electrode and the surrounding passive cathodic area, but also between the defect site and the still passive cathodic area of the other electrode. This current can then be measured and analyzed as electrochemical current noise.

US7282928B1 (Pepperl & Fuchs) is directed to a corrosion measurement field device, showing a 2 inch (50.8 nillimetres) probe for mounting to a 2 inch (50.8 millimetres) access fitting. US3,639,876 is directed to a probe body for field corrosion tests, particularly to apply the LPR technique, using three electrodes, said probe body being designed for use with a dedicated access fitting at the pipe or other appliance of interest. US3,996,124 discloses a flush mounted corrosion probe assembly for a pipeline. US4,667,150 discloses a multi electrode probe having a first central electrode and further electrodes arranged symmetrically in a circle around the first electrode, all electrodes being mutually parallel and at least two of the other electrodes being made of different metals than each other and the first electrode. All electrodes are for electrochemical tests and are individually galvanically connected to a measuring implement, each through a single wire. US4,102,769 discloses another electrode probe for accurate corrosion measurement of metals in ionically conducting liquids. This probe is designed for laboratory use at atmospheric pressure and unsuitable for application in a high pressure high temperature harsh industrial environment. US4,840,719 discloses a probe with a plurality of concentrically applied ring shaped electrodes. US4780664 discloses a corrosion sensor having two electrodes and allows measuring of instantaneous corrosion rate and time averaged corrosion rate. WO2009/015318 A1 discloses a small scale thin channel flow cell system for corrosion study, based on the flow between two parallel walls.

In particular the invention is directed to application of measurement techniques for corrosion or erosion monitoring in the field on a large scale. A typical application field is the oil and gas industry, such as an associated oil or gas production plant or off shore exploration structure. As an alternative, the invention is exclusively directed to corrosion monitoring and erosion monitoring is excluded.

The invention is defined in the claims.

With the invention one or more of uniform corrosion, localized corrosion such as pitting, crevice corrosion, cracking, weld root corrosion and stress corrosion cracking can be monitored.

In an embodiment, the probe device is provided with electrodes which are shared by two or more detection members with which the probe device is provided, such that the probe device houses two or three electrode assemblies sharing at least an electrode such that these assemblies are not physically distinct, however still have distinct functionality.

Preferably each electrode of the one detection member (i.e. ER electrode assembly) of the detection group is spaced from any electrode of any other detection member (i.e. LPR electrode assembly) of the same detection group by less than 50 (fifty), preferably less than 25 (twentyfive), more preferably less than 10 (ten), or even less than 5 (five) millimetres within the single probe device. Preferably all electrodes of the probe device are mutually galvanically isolated, e.g. by sufficient spacing (e.g. 0.1 millimetre spacing could be sufficient for the electrode parts submerged into the fluid of interest). Preferably all electrodes of the probe device fit within a diameter of 45 or 50 millimetres.

In case the probe device is provided with electrodes which are shared by two or more detection members with which the probe device is provided, the following could apply: E.g. the probe is provided with a single LPR dedicated electrode and a single ER electrode which latter is used with the LPR electrode for the two electrodes LPR measurement (using the WE and the RE), thus the ER electrode is also LPR electrode. Such probe could be provided with a third dedicated electrode as LPR electrode for three electrodes LPR measurement (using the WE, the RE and the AE). In such case it is preferred when the measuring or monitoring system is designed such that the signals from the electrodes of the probe are in an alternating manner applied for the one (e.g. ER) or the other (e.g. LPR) technique. E.g. at a first time the signals from two or more galvanic connections of the ER electrode (in case the ER electrode has six such connections, four of them supply signals since two of them are used for galvanic current supply) are evaluated or processed by the monitoring system, while at a second time the signals from a single such connection of the ER electrode are processed by the monitoring system, this time in association with signals from the one or more LPR electrodes. Such sharing of electrodes allows application of galvanic connectors with limited number of connector pins. With a probe combining ER and three electrode LPR, there are between seven and nine leads (three LPR and between four and six ER), thus a nine pin connector is required to connect the probe to the monitoring system. If with such probe the ER electrode is shared with LPR, there would be six leads in case the ER electrode would apply four galvanic connections (the other two leads each connected to one of the two LPR dedicated electrodes), such that the more widespread six pin connector could be used to connect the probe to the monitoring system. It will be appreciated that the monitoring system is designed to process the signals conducted by the galvanic leads of the probe device with shared electrode or electrodes in an alternating manner (e.g. by using signals from all leads (except the current supply leads) of the ER electrode at a first time (ER measurement) and using signals from only part of those leads (e.g. at least one or two leads less, typically merely a single lead since an LPR electrode requires merely a single lead) at a second time (LPR measurement), at that second time signals from to the dedicated LPR electrodes connected leads are also processed by the monitoring system. For such alternating operation the monitoring system has convenient means and/or is conveniently programmed.

Preferably all electrodes of the ER and LPR combination of the probe device (indeed or not with shared electrode(s)) are made from the same material or alloy, e.g. steel (e.g. low carbon) or stainless steel, or copper or brass or aluminium. The probe device carries a first (preferably exactly one) electrode (ER type) with at least three, four or five galvanic connections to equal number of galvanic leads (one for each connection), and exactly one, two or three electrodes (LPR type) each with exactly one galvanic connection to an associated galvanic lead.

The invention is based on the recognition that the electrodes of different electrode assemblies can be located very close to each other without detrimental effects to the measuring results, such that two or more electrode assemblies can be combined into a single probe device. Such compact, integral probe device yields the advantage that the two or three different detection techniques (combined in the single probe device) are applied at the very same physical location at the object of interest, such that local variations in physical conditions (e.g. flow behaviour of the measured fluid, temperature, pressure) are absent. Such local variations typically are detrimental when use is made of two or more electrode probes spaced along the object of interest. It must be appreciated that due to the harsh conditions under which the object of interest is operated, access fittings need a relatively large spacing to avoid undesired weakening of the object.

In another aspect the invention is based on the recognition that an ER type electrode could be a shared electrode to also be used as LPR type electrode. In a further aspect the invention is based on the recognition that a corrosion coupon could also be used as ER or LPR type electrode.

Further advantages of the invention are, among others, one or more of: limited number of probes, thus limited number of access fittings; limited number of leads, connector pins, electrodes exposed to the fluid of interest mounted to the probe device.

The probe device combining ER and LPR will allow to measure the following 4 signals online, e.g. fed into a computer:
- Uniform corrosion by LPR with floating B-constant and HDA (harmonic distortion analysis).
- Uniform corrosion (metal loss) by ER.
- Localized corrosion (pitting, crevice corrosion and stress corrosion cracking) by ECN (electrochemical current noise).
- Conductance.

These 4 signals can be commonly evaluated, e.g. as follows: the uniform corrosion data of the ER and LPR probe are compared; the likelihood on and severity of localized corrosion is defined by analyzing the localized corrosion output and both uniform corrosion outputs; any conductance variations are checked by analyzing the conductance output.

For the LPR, preferably a two or three electrode test cell configuration (assembly of three electrodes) with preferably a potentiostatic circuit cell control is used as this offers the best possible control of the potential of the test electrode and of the applied measurement perturbation. In a potentiostatic arrangement the test cell is placed in the feedback loop of an amplifier. The feedback arrangement controls the applied potential difference between the test electrode (WE) and the reference electrode (RE) by supplying a polarization current through the third, auxiliary, electrode (AE). As an alternative, for the LPR a two electrode assembly is applied. However the advantage of a three electrode assembly over the two electrode assembly is that it eliminates any contribution of the reference and auxiliary electrode processes to the measurement result. This is especially important when a dynamic measurement technique such as HDA is used. Thus, with the invention, for the LPR the probe device has preferably exactly two or three electrodes immersed in the corroding fluid within the object of interest, although the probe device could have more then three electrodes immersed in the corroding fluid and dedicated to LPR.

For the ER preferably the probe device is provided with exactly one single electrode immersed into the corroding fluid within the object of interest and dedicated to ER.

For the CC the probe device preferably is provided with exactly one single electrode immersed into the corroding fluid within the object of interest and dedicated to CC.

For the electrodes immersed into the corroding fluid within the object of interest, the following shapes and dimensions preferably apply: For LPR: cylindrical shaped, solid cross section, diameter between 1 and 5 millimetres, length (immersed part) between 20 and 50 millimetres. For ER: strip shaped (e.g. width not more than 30 percent of the length, thickness not more than 10 percent of the width) or hollow cylinder with sealed distal end, or wire, width between 5 and 15 millimetres, length (immersed part) between 20 and 50 millimetres. For CC: strip shaped (e.g. width not more than 30 percent of the length, thickness not more than 10 percent of the width), width between 5 and 15 millimetres, length (immersed part) between 20 and 50 millimetres.

The invention is in particular directed to 2 inch (50.8 millimetres) probes and 2 inch (50.8 millimetres) access fittings. Thus, the probe device is preferably provided with electrodes in such a manner that all electrodes mounted to the probe device and immersed into the corroding fluid commonly fit within a cylinder having an internal diameter of 2 inch (50.8 millimetres).

Preferably all electrodes mounted to the probe device and immersed into the corroding fluid are present at a longitudinal end of the probe device and are mutually parallel oriented and project from the probe device or a part or all electrodes are flush. The flush electrodes are embedded in the probe.

Improved results can be obtained if in a single probe device LPR and CC are combined such that an electrode dedicated to LPR (preferably the WE) has a feature identical to a feature of an electrode dedicated to CC. Such feature is e.g. artificial, e.g. a notch made in its surface, such notch or other feature e.g. provided to monitor a specific type of corrosion, e.g. stress corrosion cracking. As an example for CC a British Standard BS7448 coupon is mounted to the probe device and one of the three LPR electrodes (e.g. WE) mounted to the same probe device is provided with a notch identical to the notch made in the BS7448 coupon.

Obviously, the CC electrode, when merely used as CC type, needs no galvanic connection to the data logger. However, the CC electrode could simultaneously be used as electrochemical or ER electrode and would then need a galvanic connection to the data logger or different measuring instrument.

As an example, with one or more of ER, LPR (or different electrochemical type) or CC stress corrosion cracking can be detected. A notched ER electrode allows crack propagation by change of galvanic resistance. A notched LPR electrode allows measurement of localised corrosion by e.g. electrochemical noise, CC shows crack propagation near notch.

The electrodes of the probe device are associated with a monitoring device such that signals of the electrodes arrive at the monitoring device to be processed by the monitoring device to obtain a desired monitoring output. For that reason the electrodes are preferably galvanically connected to the monitoring device, e.g. through leads or wires. An alternative connection is also possible, e.g. wireless. The object is to get signals from the electrodes to the monitoring device. With the ER type electrode, one measures at two or more distinct areas of the electrode, e.g. voltage drop, and this yields a number of signals of distinct nature equal to the number of distinct areas, such that an ER type electrode provides measuring signals of at least two distinct natures and these signals must be received by the monitoring device such that the latter can correctly process those signals according to their nature for required distinction in the monitoring output. With the LPR type electrode one measures at a single area of the electrode and this yields signals of one distinct nature which should be transferred to the monitoring device. This signal transfer is preferably obtained by conducting the signals by leads distinct for each signal nature (thus a single lead for LPR type electrode and a plurality of leads for ER type electrode), however a different technique to distinctly transfer the signals from the electrode to the monitoring device is feasible as well. In case of a shared electrode, the same transfer path, e.g. lead, could be used to alternatingly transfer signals of the one nature (associated with ER type) and the other nature (associated with LPR type) since the time distinction (time elapse between the alternating measurements) already provides the required distinction of the signals.

The probe can be used for many other applications such as corrosion inhibitor control and quality of water purification for human consumption. Besides, the probe can be used for other functions as corrosion measurements. For example for process control, online analysis of the medium such as Oxygen measurement and for measuring biofilm activity and chlorination processes. The probe can be applied to a high temperature wellhead for a gas platform.

The invention is further elaborated by way of presently preferred embodiments, shown in the drawing.

Illustrated are in:
Fig. 1 a probe device mounted in an access fitting at a pipe conducting a corroding fluid, in perspective sectional view;
Fig. 2 a probe device in longitudinal sectional view;
Fig. 3 two identical probe devices provided with both LPR and CC, in perspective view, one of them in exploded view;
Fig. 4 the probe device of fig. 3 mounted in an access fitting at a pipe, in cross sectional view, in perspective view and a detail;
Fig. 5 a probe device provided with both LPR and ER, in exploded perspective view;
Fig. 6 details of a BS7448 coupon for CC.
Fig. 7 three different ER type electrodes in perspective view;
Fig. 8 a probe device provided with both LPR and ER type electrodes, in exploded perspective view;
Fig. 9 three LPR electrodes in perspective view;
Fig. 10 an alternative probe device in exploded perspective view;
Fig. 11 an alternative probe device in exploded sectional side view; and
Fig. 12 an perspective end view of the fig. 8 probe.

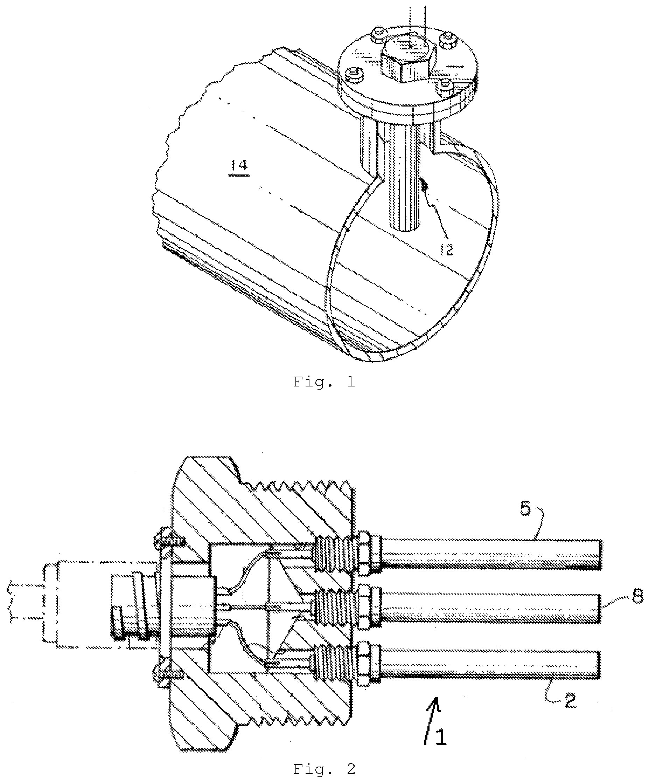

Fig. 1 shows a pipe 14 provided with a probe assembly 12 mounted in an access fitting.

As fig. 2 shows, a probe assembly not in accordance with the present invention comprises a metallic body which carries replaceable cylindrical electrodes 2, 5, 8 serving as reference, working and auxiliary electrodes, respectively, of LPR (commonly referred as 1) . These electrodes extend outwardly from the lower longitudinal end of probe body and are mutually parallel. These electrodes are in an isolated manner individually connected to a corrosion monitoring or measuring instrument (not shown), e.g. a multi channel monitoring instrument. The external screw thread is adapted to engage with internal screw thread of a pipe fitting forming part of a piping system conduction fluids whose corrosive effect is to be determined with the aid of the probe assembly.

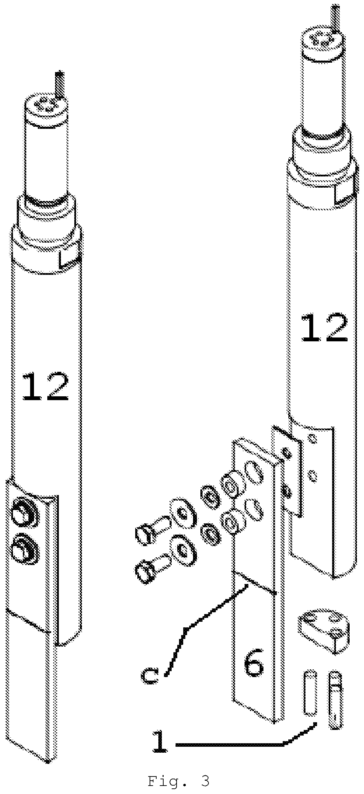

Based on this probe design of fig. 2, to the probe 12 of fig. 3, which is not in accordance with the present invention, the three LPR electrodes (commonly referred to by reference number 1) and a single CC electrode (coupon) 6 are mounted. The CC electrode is galvanically isolated from the probe body and is not connected to any means external from the probe body. Reference sign c refers to a notch machined into the coupon for testing corrosion cracking. To the left the probe 12 as assembled is shown, to the right the parts are shown in exploded view. Thus, LPR and CC are physically distinct electrode assemblies.

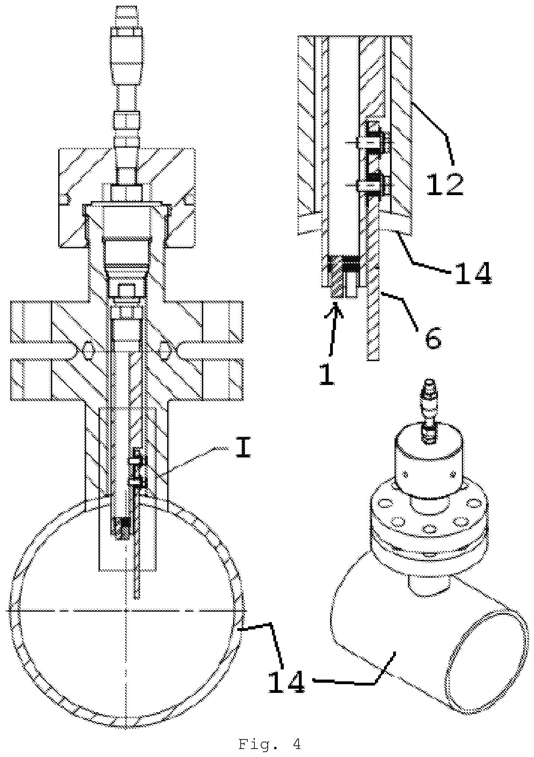

Fig. 4 shows how the electrodes 1 and 6 of the probe 12 of fig. 3 are immersed into the fluid flowing in the pipe 14. The probe device 12 is mounted in an access fitting at a pipe 14 conducting a corroding fluid. The top right hand corner shows detail I of the cross sectional view at the left hand side.

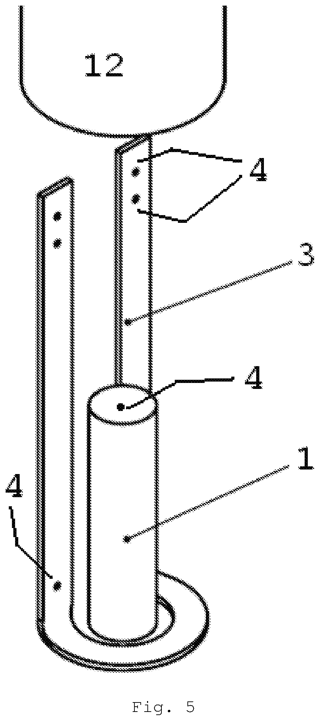

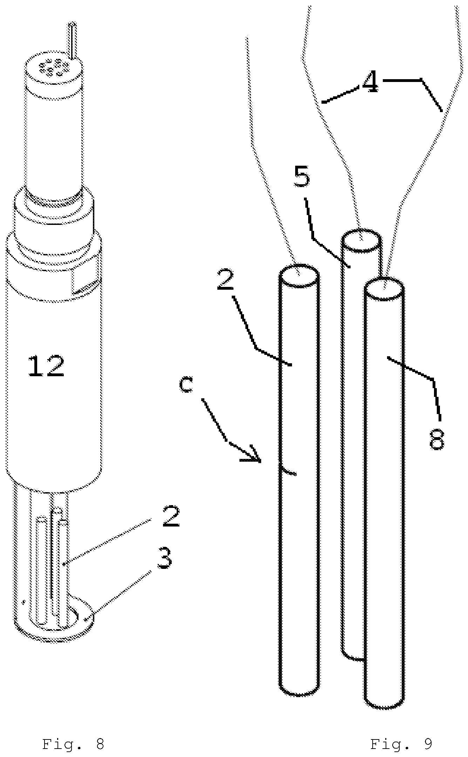

Fig. 5 shows a probe device in accordance with the present invention, carrying a single LPR electrode 1 and a single ER electrode 3. Six leads (wires) are connected to the single ER electrode (the not illustrated wires are galvanically connected to the electrode 3 at connections 4, of which one (at the same level as the lower connection 4 shown and provided at the opposite leg) is hidden behind electrode 1) and a single lead (not illustrated) to the single LPR electrode, totalling seven leads combined into the 9 pin connector at the opposite end of the probe body (not shown in fig. 5, visible in fig. 8), for connection to a multi channel monitoring device having at least 7 channels. The electrode 3 is alternatingly used in isolation for ER measurement (in which case all six connections are used, two for current supply, four providing measuring signals to the monitoring system) and in association with electrode 1 for electrochemical measurement (in which case only one of the connections of the electrode 3, and also the connection of the electrode 1 are used by the monitoring system to receive measuring signals from both electrodes 1 and 3. Thus, electrode 3 is a shared electrode.

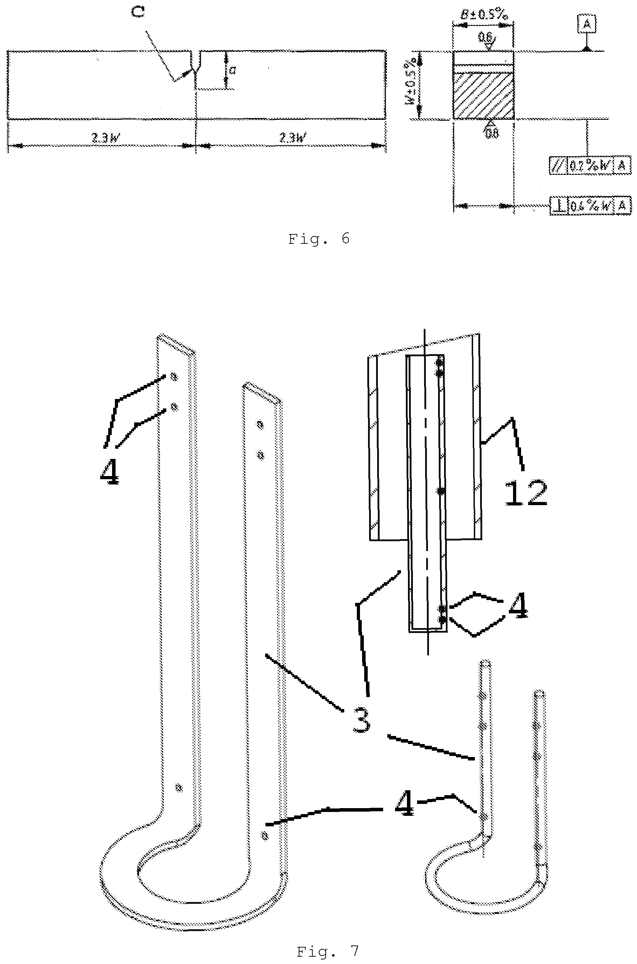

Fig. 6 shows the BS7448 coupon, to detect corrosion cracking. Crack length a equals 0.45W to 0.55W. W equals B. Surface finish is in micrometers. The cross sectional view to the right hand side is through the notch. The probe of fig. 3 could be provided with this BS7448 coupon and the WE electrode could be provided with a notch identical to the notch provided in the BS7448 coupon (fig. 9 shows such notched electrode) .

Fig. 7 shows three different ER type electrodes 3, made from strip, wire or a hollow cylinder, respectively. The six individual connections 4 of leads or wires for galvanic connection to the measuring implement are clearly visible and mutually spaced across the strip or wire type electrode 3. Of the six connections, the top most two (each at a different leg) are for inputting and outputting. The remaining four are for measuring voltage drop. The connections 4 are equally divided between the two legs of the electrode 3. The electrodes made from strip or wire are U shaped wherein the bridge connecting the two legs is angled relative to the legs. Preferably only this bridge and possibly the part of the legs extending from the bridge are exposed to the corroding fluid, preferably not a single galvanic connection is exposed to the corroding fluid. The hollow rod like electrode has a sealed end exposed to the corroding fluid, such that the inner cavity is kept free from corroding fluid. The five galvanic connections 4 are located on the inner wall of the hollow rod 3, spaced two close to the lower end, two close to the upper end and a single one halfway the electrode length. For all three electrode types, in an alternative one, two or three galvanic connections and the corresponding wires could be eliminated. Different shapes for the ER electrode type are also possible.

Fig. 8 shows a probe 12 in accordance with the present invention separately combining a single ER electrode 3 and three LPR electrodes (one indicated as 2), requiring a nine pin connector (six leads for the ER, three leads for the three LPR electrodes) as shown at the probe top. Thus LPR and ER are physically distinct electrode assemblies.

Fig. 9 shows the three electrodes 2, 5, 8 of the LPR type of fig. 8. Into the WE electrode 2 a notch is machined (indicated by reference sign c). As shown, each electrode is connected to a respective wire 4 for the galvanic connection to the measuring implement.

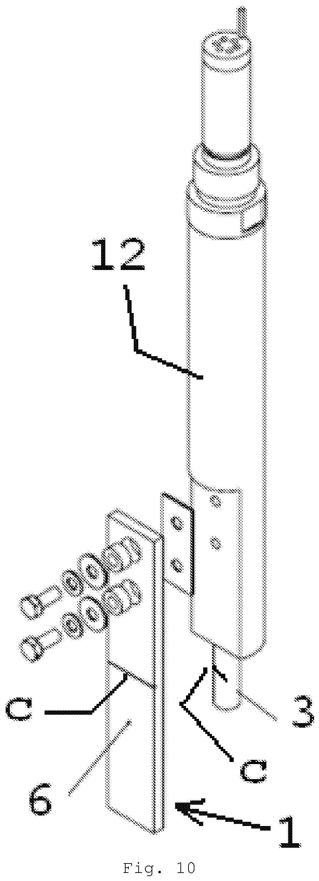

Fig. 10 illustrates a probe in accordance with the present invention carrying a corrosion coupon 6 having a notch c, which element 6 simultaneously functions as electrode 1 of LPR type, thus connected to a single lead. The probe 12 also carries an electrode 3 of ER type (the hollow cylinder shown at the right hand top corner in fig. 7), thus connected to at least three or four leads, such that a six pin connector at the probe top is typically sufficient. Electrode 3 also carries a notch c, preferably radially completely around midway the length of the exposed part.

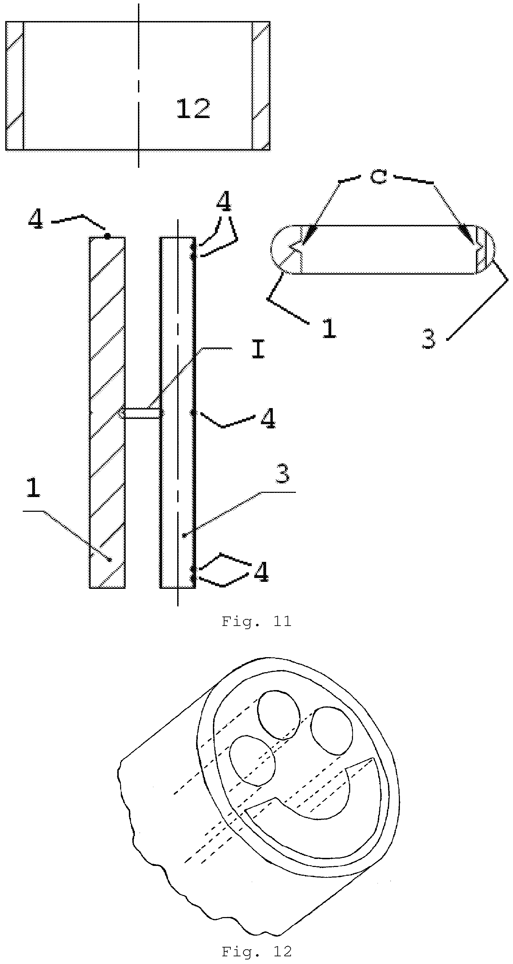

Fig. 11 shows a probe device 12 in accordance with the present invention carrying a single ER type electrode 3 (of the hollow type shown in fig. 10) and a single LPR type electrode 1 (of solid bar or rod type). Electrode 3 is connected to five leads 4, electrode 1 to a single lead 4. Both electrodes 1, 3 are externally provided with a notch c which, for electrode 3, radially completely extends around. The electrodes of the probes of fig. 5 and 8 and also the U-shaped electrodes of fig. 7 do not project (so called flush), contrary to the other probes illustrated. If flush, only the superficial end face of the electrode, which end face is part of the external surface of the probe, is exposed to the fluid of interest.

Fig. 12 shows the single ER electrode and the three LPR electrodes a finally assembled, thus beings embedded into the probe body such that these electrodes are flush with the end face of the probe body.

## Claims

1. Probe device, comprising an Electrical Resistance (ER) type electrode (3) and one or two Linear Polarization Resistance (LPR) type electrodes (1), wherein the Electrical Resistance type electrode and the one or two Linear Polarization Resistance type electrodes are designed to be exposed to a fluid of interest, **characterized in that** the Electrical Resistance type electrode is connected to at least three or four leads of the probe device and configured to output measurement signals of at least two distinct natures, since said at least three or four leads are connected to distinct areas of the Electrical Resistance type electrode, to a connectable monitoring system and wherein the one or two Linear Polarization Resistance type electrodes are each connected to a single lead of the probe device, one for each Linear Polarization Resistance type electrode, and configured to output measurement signals of one nature, since said single lead is connected to a single area of the Linear Polarization Resistance type electrode, to a connectable monitoring system.

2. Probe device according to claim 1 wherein the Electrical Resistance type electrode and the one or two Linear Polarization type electrodes are of the same material or alloy, and/or wherein the probe device also comprises a measuring electrode (6) of the Corrosion Coupon (CC) measurement technique.

3. Method of monitoring wherein a probe device carrying an Electrical Resistance (ER) type electrode (3) and one or two Linear Polarization Resistance (LPR) type electrodes (1), wherein the Electrical Resistance type electrode and the one or two Linear Polarization type electrodes are exposed to a fluid of interest, and are connected to a monitoring system, **characterized in that** the Electrical Resistance type electrode is connected to at least three or four leads of the probe device (12) to output measurement signals of at least two distinct natures since these signals are obtained from distinct areas of the Electrical Resistance type electrode to said connected monitoring system and which Linear Polarization Resistance type electrodes are each connected to a single lead of the probe device, one for each Linear Polarization Resistance type electrode to output measurement signals of one nature to said connected monitoring system, and wherein at a first time the monitoring system processes signals from the Electrical Resistance type electrode into a desired Electrical Resistance type output and at a second time processes signals from both the Electrical Resistance type electrode and the one or two Linear Polarization Resistance type electrodes into a desired Linear Polarization Resistance type output, such that said monitoring system alternatingly outputs Electrical Resistance and Linear Polarization Resistance type monitoring results.

4. Probe device according to claim 1 or 2, wherein one of the Electrical Resistance type electrode or the one or two Linear Polarization type electrodes has a machined notch for monitoring corrosion cracking.

## Patentansprüche

1. Sondenvorrichtung die eine Elektrode (3) vom ER-Typ (Electrical Resistance) und eine oder zwei Elektroden (1) vom LPR-Typ (Linear Polarization Resistance) trägt, wobei die Elektrode vom ER-Typ und die eine oder zwei Elektroden vom LPR-Typ so ausgelegt sind, dass sie einem interessierenden Fluid ausgesetzt werden, **dadurch gekennzeichnet, dass** die Elektrode vom ER-Typ mit mindestens drei oder vier Leitungen der Sondenvorrichtung verbunden ist und Konfiguriert ist, um Messsignale von mindestens zwei verschiedenen Arten, weil die mindestens drei oder vier Leitungen an separate Gebieten der Elektrode vom ER-Typ angeschlossen sind, an einer anzuschließen Überwachungssystem auszugeben und wobei die eine oder zwei Elektroden vom LPR-Typ jeweils an eine einzelne Leitung der Sondenvorrichtung angeschlossen sind, eine für jede Elektrode vom LPR-Typ, und Konfiguriert um Messsignale einzelner Art, weil die einzelne Leitung angeschlossen ist an einer einzelner Gebiet der Elektrode LPR-Typ, an ein anzuschließen Überwachungssystem auszugeben.

2. Sondenvorrichtung nach Anspruch 1, wobei die Elektrode vom ER-Typ und die eine oder zwei Elektroden vom LPR-Typ aus demselben Material oder derselben Legierung bestehen, und/oder wobei die Sondenvorrichtung weiter eine Messelektrode (6) der Corrosion Coupon (CC) Messtechnik trägt.

3. Überwachungsverfahren wobei eine Sondenvorrichtung eine Elektrode (3) vom ER-Typ und eine oder zwei Elektroden (1) vom LPR-Typ trägt, wobei die Elektrode vom ER-Typ und die eine oder zwei Elektroden vom LPR-Typ einem interessierenden Fluid ausgesetzt sind und an eine Überwachungssystem angeschlossen sind, **dadurch gekennzeichnet, dass** die Elektrode vom ER-Typ mit mindestens drei oder vier Leitungen der Sondenvorrichtung (12) verbunden ist um Messsignale von mindestens zwei verschiedenen Arten, weil diese Signale bekommen werden von separate Gebieten der Elektrode vom ER-Typ, an der angeschlossen Überwachungssystem auszugeben und wobei die Elektroden vom LPR-Typ jeweils an eine einzelne Leitung der Sondenvorrichtung angeschlossen sind, eine für jede Elektrode vom LPR-Typ, um Messsignale einzelner Art and der angeschlossen Überwachungssystem auszugeben, und wobei das Überwachungssystem zum ersten Mal Signale von der Elektrode vom ER-Typ in einen gewünschten Ausgabe vom ER-Typ verarbeitet und zum zweiten Mal Signale sowohl von der Elektrode vom ERals auch vom LPR-Typ in einen gewünschten Ausgabe vom LPR-Typ verarbeitet, so dass die Überwachungssystem abwechselnd Überwachungsergebnisse vom ER-Typ und LPR-Typ ausgibt.

4. Sondenvorrichtung nach Anspruch 1 oder 2, wobei eine der Elektroden vom ER-Typ oder die eine oder zwei Elektroden vom LPT-Typ eine bearbeiteten Kerbe zur Überwachung von Korrosionsrissen trägt.

## Revendications

1. Dispositif de sonde portant une électrode (3) de type ER (Electrical Resistance) et une ou deux électrodes (1) de type LPR (Linear Polarization Resistance), lesquelles électrodes sont configuré pour être exposées à un fluide d'intérêt, **caractérisé en ce que** l'électrode de type ER est connectée à au moins trois ou quatre conduits du dispositif de sonde (12) et configuré à émettre des signaux de mesure d'au moins deux natures distinctes, lesquelles au moins trois ou quattre conduits sont connectée à des zones distinctes de l'électrode de type ER, vers une système de surveillance connectable et quelles électrodes de type LPR sont chacune connectées à un fil unique, une pour chaque électrode de type LPR et configuré pour émettre des signaux de mesure d'une nature, quant le fil unique est connecté à une zone unique de l'électrode de type LPR, vers une système de surveillance connectable.

2. Dispositif de sonde selon la revendication 1, l'électrode (3) de type ER et les une ou deux électrodes (1) de type LPR sont de du même matériau ou alliage, et/ou le dispositif de sonde à une électrode de mesure (6) de technique de mesure Corrosion Coupon (CC).

3. Procédé de surveillance dans lequel un dispositif de sonde portant une électrode (3) de type ER et une ou deux électrodes (1) de type LPR, lesquelles électrodes sont exposées à un fluide d'intérêt, est connecté à un système de surveillance, **caractérisé en ce que** l'électrode de type ER est connectée à au moins trois ou quatre conduits du dispositif de sonde (12) à émettre des signaux de mesure d'au moins deux natures distinctes, lesquelles signaux sont obtenu des zones distinctes de l'électrode de type ER, vers ledit système de surveillance connecté et quelles électrodes de type LPR sont chacune connectées à un fil unique, une pour chaque électrode de type LPR pour émettre des signaux de mesure d'une nature distincte vers ledit système de surveillance connecté, et dans lequel à une première fois le système de surveillance traite des signaux provenant de l'électrode de type ER en une émission de type ER souhaitée et à une seconde fois traite des signaux provenant à la fois des électrodes de type ER et LPR en une émission de type LPR souhaitée, de sorte que ladite système de surveillance produit en alternance les résultats de surveillance de type ER et LPR.

4. Dispositif de sonde selon la revendication 1 ou 2, une de l'électrode de type ER ou les une ou deux électrodes de type LPR ayant une encoche usinée pour surveiller la fissuration par corrosion.
